# EUROPEAN PATENT APPLICATION

(11) **EP 3 783 543 A1**
(43) Date of publication of application: **24.02.2021**
(21) Application number: 19922572.3
(22) Date of filing: 29.03.2019
(51) Int. Cl.: G06N 20/00, G06N 5/04, G06Q 30/06

(54) **LEARNING SYSTEM, LEARNING METHOD, AND PROGRAM**

(71) Applicant: Rakuten, Inc., Tokyo 158-0094 (JP)
(72) Inventor: TOMODA, Kyosuke, Tokyo 158-0094 (JP)
(74) Representative: EIP
(86) International application number: PCT/JP2019/014212
(87) International publication number: WO 2020/202327

(57) **Abstract**

First classifying means (102) of a learning system (S) performs classification relating to data based on a machine learning model. Second classifying means (103) performs classification relating to the data based on a predetermined rule. Determining means (104) determines whether the rule is to be learned based on statistical information relating to data satisfying the rule. Training means (106) executes training processing of the rule that is determined to be learned by the determining means (104).

## Description

### Technical Field

The one or more embodiments of the present invention relates to a learning system, a learning method, and a program.

### Background Art

Techniques for classifying data based on a machine learning model have been studied. For example, Patent Literature 1 describes a system generating a machine learning model in which the machine learning model learns teacher data that is input with a feature amount of behavior data related to the behavior of a user who accesses a website and outputs a result of determination of the legitimacy of the user so as to detect fraud of the user.

### Citation List

### Patent Literature

1. WO2019/049210

### Summary of Invention

### Technical Problem

The accuracy of classification of the machine learning model as described above is limited, and thus, the inventors are independently studying on preparing a rule separately from the machine learning model and utilizing both the machine learning model and the rule. For example, in the system of Patent Literature 1, it is conceivable to prepare, separately from the machine learning model, rules relating to features that cannot be determined by the machine learning model, so as to increase the accuracy of detecting fraud.

For example, the behavior of malicious third parties changes from day to day, and thus, the inventors consider that the number of rules gradually increases. For this reason, in order to reduce the number of rules, the inventors consider that it may be better to train the machine learning model to learn the rules as many as possible. However, some rules are suitable for learning, while others are not. For example, if the machine learning model is trained to learn a rule that is not suitable for learning, the accuracy of the machine learning model may be deteriorated.

One or more embodiments of the present invention have been conceived in view of the above, and an object thereof is to provide a learning system, a learning method, and a program capable of improving accuracy of a machine learning model and reducing the number of rules.

### Solution to Problem

In order to solve the above described issues, a learning system according to the one or more embodiments of the present invention includes first classifying means for performing classification relating to data based on a machine learning model, second classifying means for performing classification relating to the data based on a predetermined rule, determining means for determining whether the rule is to be learned based on statistical information relating to data satisfying the rule, and training means for executing training processing of the rule that is determined to be learned by the determining means.

A learning method according to the one or more embodiments of the present invention includes first classifying step of performing classification relating to data based on a machine learning model, a second classifying step of performing classification relating to the data based on a predetermined rule, a determining step of determining whether the rule is to be learned based on statistical information relating to data satisfying the rule, and a training step of executing training processing of the rule that is determined to be learned in the determining step.

A program according to the one or more embodiments of the present invention causes a computer to function as first classifying means for performing classification relating to data based on a machine learning model, second classifying means for performing classification relating to the data based on a predetermined rule, determining means for determining whether the rule is to be learned based on statistical information relating to data satisfying the rule, and training means for executing training processing of the rule that is determined to be learned by the determining means.

According to an aspect of the present invention, the statistical information indicates a number of data satisfying the rule. If the number of data satisfying the rule is less than a threshold value, the determining means does not determine that the rule is to be learned. If the number of data satisfying the rule is equal to or more than the threshold value, the determining means determines that the rule is to be learned.

According to an aspect of the present invention, the statistical information indicates a distribution of data satisfying the rule. If the distribution of the data satisfying the rule is not a predetermined distribution, the determining means does not determine that the rule is to be learned. If the distribution of the data satisfying the rule is the predetermined distribution, the determining means determines that the rule is to be learned.

According to an aspect of the present invention, the learning system further includes evaluating means for evaluating an uncertainty of the rule in the machine learning model. The training means executes the training processing based on an evaluation result of the evaluating means.

According to an aspect of the present invention, the learning system further includes excluding means for excluding a rule evaluated by the evaluating means as not being uncertain so that the rule is not used.

According to an aspect of the present invention, the learning system further includes excluding means for excluding a rule learned by the training processing so that the rule is not used.

According to an aspect of the present invention, the learning system further includes evaluating means for evaluating an uncertainty of a rule in a machine learning model in which the rule has been learned by the training processing, and switching means for switching to a machine learning model in which a rule has been learned by the training processing based on the evaluation result of the evaluating means.

According to an aspect of the present invention, the second classifying means performs classification relating to the data based on each of a plurality of rules. The learning system further includes receiving means for receiving a designation of a rule to be learned among the plurality of rules. The determining means determines whether the rule, which is designated as a rule to be learned among the plurality of rules, is to be learned based on statistical information relating to data satisfying the rule designated as a rule to be learned.

According to an aspect of the present invention, the data is behavior data relating to behavior of a user. The machine learning model is a machine learning model for classifying whether the user is an unauthorized user. The rule is a rule for classifying whether the user is an unauthorized user.

### Effects of the Invention

According to the one or more embodiments of the present invention, it is possible to improve accuracy of a machine learning model and reduce the number of rules.

### Brief Description of the Drawings

FIG. 1 is a diagram illustrating an overall configuration of the learning system;
FIG. 2 is a functional block diagram illustrating an example of functions implemented by the learning system;
FIG. 3 is a diagram illustrating an example of data storage of a behavior database;
FIG. 4 is a diagram illustrating an example of data storage of a rule list;
FIG. 5 is a diagram illustrating an example when the number of behavior data satisfying the rule is small;
FIG. 6 is a diagram illustrating an example when the number of behavior data satisfying the rule is large;
FIG. 7 is a diagram illustrating an example when behavior data satisfying the rule is not biased;
FIG. 8 is a diagram illustrating an example when behavior data satisfying the rule is biased;
FIG. 9 is a flowchart showing an example of the classification processing; and
FIG. 10 is a flowchart showing an example of the training processing.

### Description of Embodiments

### [1. Overall configuration of learning system]

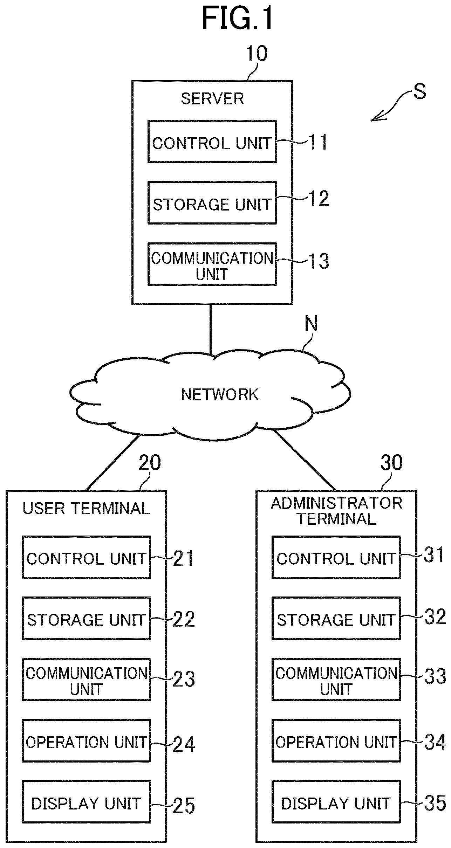

An embodiment of the learning system according to the one or more embodiments of the present invention will be described below. FIG. 1 is a diagram illustrating an overall configuration of the learning system. As shown in FIG. 1, a learning system S includes a server 10, a user terminal 20, and an administrator terminal 30, which are connectable to a network N such as the Internet. FIG. 1 shows one server 10, one user terminal 20, and one administrator terminal 30, although the number of each of them may be two or more.

The server 10 is a server computer. The server 10 includes a control unit 11, a storage unit 12, and a communication unit 13. The control unit 11 includes at least one processor. The control unit 11 executes processing in accordance with programs and data stored in the storage unit 12. The storage unit 12 includes a main storage unit and an auxiliary storage unit. For example, the main storage unit is a volatile memory such as a RAM, and the auxiliary storage unit is a nonvolatile memory such as a ROM, an EEPROM, a flash memory, and a hard disk. The communication unit 13 includes a wired or wireless communication interface for data communications through the network N.

The user terminal 20 is a computer operated by a user. The user terminal 20 is, for example, a mobile phone (including a smartphone), a portable information terminal (including a tablet computer), and a personal computer. In this embodiment, the user terminal 20 includes a control unit 21, a storage unit 22, a communication unit 23, an operation unit 24, and a display unit 25. The physical arrangement of the control unit 21, the storage unit 22, and the communication unit 23 may be the same as that of the control unit 11, the storage unit 12, and the communication unit 13.

The operation unit 24 is an input device, for example, a pointing device such as a touch panel and a mouse, a keyboard, and a button. The operation unit 24 transmits an operation of a user to the control unit 21. The display unit 25 is, for example, a liquid crystal display unit or an organic EL display unit. The display unit 25 displays a screen based on instructions from the control unit 21.

The administrator terminal 30 is a computer operated by an administrator. The administrator terminal 30 is, for example, a mobile phone (including a smartphone), a portable information terminal (including a tablet computer), and a personal computer. In this embodiment, the administrator terminal 30 includes a control unit 31, a storage unit 32, a communication unit 33, an operation unit 34, and a display unit 35. The physical arrangements of the control unit 31, the storage unit 32, the communication unit 33, the operation unit 34, and the display unit 35 may be the same as the physical arrangements of the control unit 21, the storage unit 22, the communication unit 23, the operation unit 24, and the display unit 25, respectively.

The programs and data described as being stored in the storage units 12, 22, and 32 may be provided through the network N. The hardware configurations of the computers described above are not limited to the above examples, and various types of hardware can be applied. For example, the hardware may include a reader (e.g., optical disc drive, memory card slot) for reading a computer-readable information storage medium, and an input/output unit (e.g., USB port) for inputting/outputting data to/from external devices. For example, programs and data stored in an information storage medium may be provided to the computers through the reader or the input/output unit.

### [2. Overall configuration of learning system]

In this embodiment, the processing of the learning system S will be described by taking an example of a case where the server 10 provides a website such as news or video to users and analyzes the behavior of a user who accesses the website. For example, the learning system S generates behavior data when the user accesses the website, analyzes the behavior data using a machine learning model and rules, and classifies the user into a normal user or an unauthorized user.

The behavior data is data relating to the user's behavior. The behavior data includes at least one item and stores the user's behavior. For example, the behavior data includes the URL of the website accessed by the user, identification information of the user terminal 20 used by the user (e.g., IP address, individual identification information, telephone number, SIM information), the location where the user uses the user terminal 20, the date and time when the user accesses the website, and content entered from the operation unit 24.

The normal user is a user who has behaved normally and is not an unauthorized user. The unauthorized user is a user who has performed unauthorized behavior and is not a normal user. The unauthorized behavior is behavior that is detrimental to service providers or other users, and includes, for example, hacking, cracking, malicious posting, intentionally performing a large number of accesses, harassment to other users, violation of terms of service, and violation of the law.

For example, services for normal users are not restricted, and services for unauthorized users are restricted. However, when a user is classified as an unauthorized user, the service needs not be immediately restricted. The service may be restricted after the administrator's review is performed, or after additional authentication for the user is performed.

The machine learning model is a model that has been learned. The machine learning model is also referred to as a learning device, a classifier, or a classifier learning device. In this embodiment, a machine learning model for classifying whether a user is an unauthorized user is used. Various known methods can be used for the machine learning itself. For example, methods such as neural network, reinforcement learning, or deep learning can be used. The machine learning is not limited to supervised machine learning, and semi-supervised machine learning or unsupervised machine learning may be used.

For example, the machine learning model calculates a feature amount of input data, and performs classification relating to the data. The feature amount is a numerical value indicating a feature of data, and is represented by, for example, an n-dimensional vector (n is a natural number) or an array of n elements. In addition to the machine learning model, an algorithm for calculating the feature amount may be prepared. In this case, the machine learning model does not need to calculate the feature amount, and the feature amount calculated by the algorithm is entered in the machine learning model.

For example, if an unauthorized user tends to access in a specific time zone or access at a certain frequency or more, the machine learning model learns features such as the access time zone and the access frequency of the unauthorized user. In this case, the machine learning model calculates a feature amount of the access time zone or the access frequency based on the behavior data of the user who accesses the website, and classifies the user into a normal user or an unauthorized user.

The rule includes a condition prepared separately from the machine learning model. The rule may include only one condition or a plurality of conditions. In this embodiment, the rule for determining whether a user is an unauthorized user is used. If a plurality of conditions are included in the rule, the conditions may be AND conditions or OR conditions.

In this embodiment, the rule is described as being manually defined, but an algorithm for generating the rule may be prepared. If the behavior data includes a numerical value, the rule includes a condition indicating a numerical range. Further, for example, if the behavior data includes a character, the rule includes a condition indicating whether the character matches with a predetermined character. If a feature amount of the character is expressed by Word2Vec, for example, the rule may include a condition related to a difference (distance) between the feature amounts.

In a case where the behavior data includes a plurality of items, the rule may indicate conditions regarding all of the items or conditions regarding only some items. The value included in the behavior data may be compared with the rule, or a value calculated based on the value included in the behavior data may be compared with the rule.

The rules are basically generated in a viewpoint that is not learned by the machine learning model. For example, if the features of the access time zone and the access frequency are learned by the machine learning model, the rule is generated in other viewpoints such as an access location and a user name. Here, the following three rules are taken as examples. In Rule 1, the center of use indicates an average value of user access locations in the past. The white list in the rule 3 is a list of names of users who are determined as normal users by the administrator.
(Rule 1) If a distance from the center of use is 100 km or more, the user is an unauthorized user.
(Rule 2) If an IP address indicates a country other than Japan, the user is an unauthorized user.
(Rule 3) If a user name is registered in the white list, the user is a normal user.

As described above, the behavior of malicious third parties changes from day to day, and thus, the number of rules may gradually increase. If the number of rules to be compared with the behavior data increases, the processing load on the server 10 increases, and it takes time to determine whether the user is a normal user. For this reason, it is preferable that the machine learning model learn the rules so as to reduce the number of rules.

However, some rules are suitable for learning, while others are not. For example, if the behavior data that satisfies the rules is small or the content of the behavior data is not consistent, the machine learning model may not be able to learn these features. If the machine learning model is made to learn such a rule, the accuracy of the machine learning model may be reduced.

As such, the learning system S determines whether a rule is to be learned based on statistical information on behavior data that satisfies the rule, and trains the machine learning model to learn only the rule suitable for learning, thereby improving the accuracy of the machine learning model and reducing the number of rules. This technique will be described in details below.

### [3. Functions implemented in learning system]

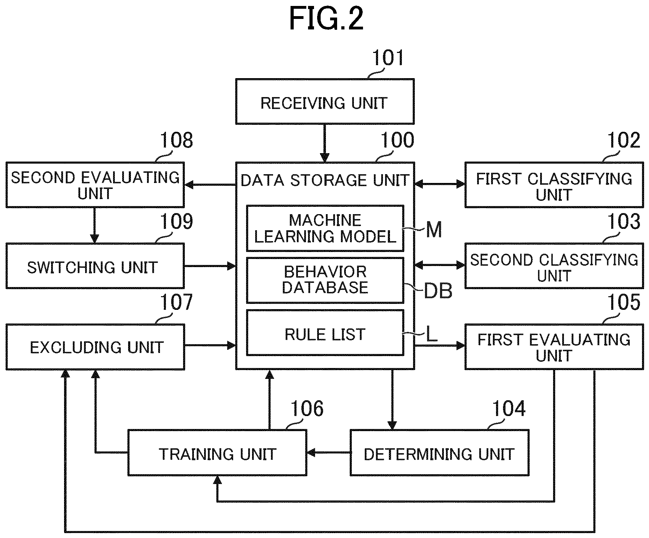

FIG. 2 is a functional block diagram illustrating an example of functions implemented by the learning system S. As shown in FIG. 2, a data storage unit 100, a receiving unit 101, a first classifying unit 102, a second classifying unit 103, a determining unit 104, a first evaluating unit 105, a training unit 106, an excluding unit 107, a second evaluating unit 108, and a switching unit 109 are implemented by the server 10.

### [3-1. Data storage unit]

The data storage unit 100 is implemented mainly by the storage unit 12. The data storage unit 100 stores data necessary for executing the processing described in this embodiment. Here, a machine learning model M, a behavior database DB, and a rule list L will be described as examples of data stored in the data storage unit 100.

The data storage unit 100 stores programs (algorithms) and parameters of the machine learning model M. The parameters of the machine learning model M have been adjusted using the teacher data. For example, the teacher data is generated so that the user's behavior data in the past is input and the classification result (value indicating whether the user is a normal user or an unauthorized user) by the administrator is output.

In the above described example, the administrator recognizes the tendency of unauthorized users appearing in the access time zone and the access frequency, and teacher data that is input with these features and outputs that the users are unauthorized users is generated. The machine learning model M has already been trained based on the teacher data, and outputs a classification result based mainly on features related to the access time zone and the access frequency. For example, the machine learning model M calculates a feature amount of input behavior data, and outputs a value (label) indicating the classification result.

In this embodiment, the machine learning model M classifies a user as either a normal user or an unauthorized user based on behavior data related to the behavior of the user. As such, either a value indicating a normal user or a value indicating an unauthorized user is output. The machine learning model M may output a score indicating a probability (accuracy) of the classification. In this case, the machine learning model M may output at least one of a score indicating the probability of a normal user and a score indicating the probability of an unauthorized user. In the following, the reference numeral of the machine learning model M is omitted.

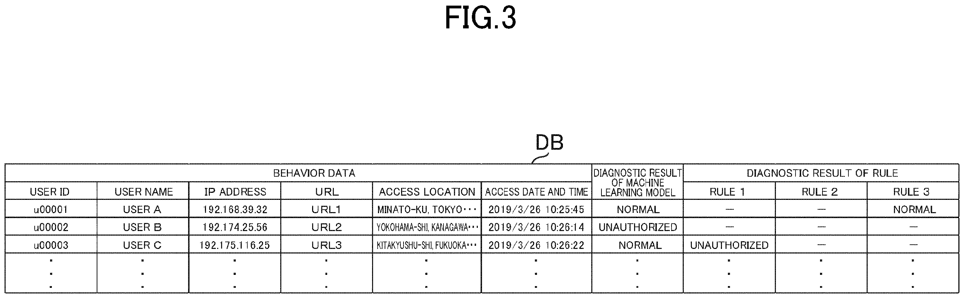

FIG. 3 is a diagram illustrating an example of data storage of the behavior database DB. As shown in FIG. 3, the behavior database DB stores behavior data and diagnostic results based on the machine learning model and the rules. For example, the behavior data stores user IDs, user names, IP addresses, URLs of the accessed websites, access locations, and access dates and times. In this embodiment, a user is registered in the database in advance, and basic information such as a user ID and a user name is registered in the data storage unit 100 in advance.

The user ID is information that uniquely identifies the user. The user name is a name entered by the user at the time of the registration. The IP address is an IP address of the user terminal 20 used when the user accesses the server 10. The access location is information regarding the location of the user terminal 20 when the user accesses the server 10. The access location is estimated using the IP address, GPS information (latitude/longitude information or coordinate information), wireless base station information, and access point information, for example. The access date and time is the date and time when the user accesses the server 10.

The diagnostic result of the machine learning model is a classification result in a case where behavior data is input to the machine learning model. When the machine learning model outputs a score, the score may be included in the diagnostic result of the machine learning model. The diagnostic result of the rule is a classification result when behavior data is checked in view of the rule. In a case where a plurality of rules are prepared, a diagnostic result of each rule is stored. In this embodiment, a user is classified as either a normal user or an unauthorized user based on each of the machine learning model and the rule, and thus, a value of either a normal user or an unauthorized user is stored as a diagnostic result.

When the server 10 receives access by a user, the server 10 generates behavior data including a user ID, a user name, an IP address, an access location, and an access time, and stores the behavior data in the behavior database DB. The generated behavior data is classified into a normal user or an unauthorized user by the processing of the first classifying unit 102 and the second classifying unit 103, which will be described later, and a diagnostic result of the machine learning model and a diagnostic result of the rule are stored.

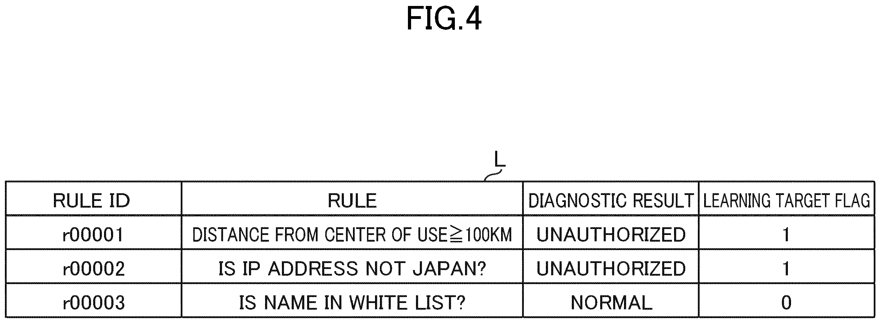

FIG. 4 is a diagram illustrating an example of data storage of the rule list L. As shown in FIG. 4, the rule list L stores data related to rules. In the present embodiment, three rules will be described, although the number of rules may be freely determined, and may be one, two, four or more, for example. For example, the rule list L stores rule IDs, rule content, diagnostic results, and learning target flags.

The rule ID is information that uniquely identifies the rule. A rule ID is issued each time a new rule is added. The content of the rule stores a condition regarding at least one of a plurality of items included in the behavior data. For example, if the behavior data includes a numerical value, the content of the rule is a numerical value range. As the numerical value range, conditions such as a threshold value or more and less than a threshold value, or a first threshold value or more and less than a second threshold value are stored. For example, if the behavior data includes characters, the content of the rule is a condition indicating whether a predetermined character is included.

For example, a rule having a rule ID "r00001" is such a rule that a value of "distance from the center of use" calculated based on the "access location" of the behavior data is "100 km or more." Further, for example, a rule having a rule ID "r00002" is such a rule that a numerical value of "IP address" of the behavior data is not included in the range of Japanese IP addresses. Further, for example, a rule having a rule ID "r00003" is such a rule that a character string indicated by "user name" of the behavior data is included in the white list.

The diagnostic result is a classification result when the rule is satisfied, and indicates, for example, whether the user is classified as a normal user or an unauthorized user when the rule is satisfied. The learning target flag is information indicating whether the rule is a rule to be learned. For example, if the learning target flag is on, it indicates that the rule is to be learned, and if the learning target flag is off, it indicates that the rule is not to be learned.

In this embodiment, the determining unit 104 and the learning unit 106 described later perform the processing only on the rules to be learned, and the rules that are not to be learned are excluded from the processing performed by the determining unit 104 and the training unit 106. For example, a rule that is not to be learned is a rule that is not suitable for learning, and may be referred to as an exception rule. In contrast, the rule to be learned is a rule suitable for learning depending on statistics, and may be referred to as a non-exception rule.

When adding a new rule, the administrator of the learning system S specifies content, a diagnostic result, and a learning target flag of the rule. The server 10 issues a new rule ID and stores the rule ID in the rule list L together with the specified information, thereby adding the new rule. The rule list L may store only rules used by the second classifying unit 103 described later, or may also include old rules that are no longer used.

The data stored in the data storage unit 100 is not limited to the above example. For example, the data storage unit 100 may store a user database in which user usage registration information is stored. For example, the user database stores authentication information such as a user ID, a user name, and a password, and information such as an email address, an address, a telephone number, and a center of use.

Further, for example, the data storage unit 100 may store a white list indicating a list of normal users or a black list indicating a list of unauthorized users. The white list and the black list may be edited by the administrator of the learning system S, or may be edited by the first classifying unit 102 or the second classifying unit 103. For example, basic information such as a user ID, a user name, an email address, an address, and a telephone number is stored in each of the white list and the black list.

### [3-2. Receiving unit]

The receiving unit 101 is implemented mainly by the control unit 11. The receiving unit 101 receives designation of a rule to be learned among a plurality of rules. The rule to be learned is a rule that is learned by the machine learning model, and may be specified by, for example, a creator of the rule or another person. For example, when the administrator operates the administrator terminal 30 to generate a new rule, the administrator designates whether the rule is to be learned. Further, for example, the administrator may specify later whether the registered rule is to be learned. The receiving unit 101 receives the designation result by the administrator from the administrator terminal 30, thereby receiving the designation of the rule to be learned.

### [3-3. First classifying unit]

The first classifying unit 102 is implemented mainly by the control unit 11. The first classifying unit 102 performs classification relating to behavior data based on the machine learning model. The classification relating to the behavior data may suggest the classification of the behavior data itself, or the classification of information associated with the data. In this embodiment, the user is classified as a normal user or an unauthorized user, and thus, the user ID and the user name associated with the behavior data are classified rather than the behavior data itself. The classification may also be referred to as a type or an attribute, or a label assigned by the machine learning model.

For example, the first classifying unit 102 performs the classification relating to the behavior data by inputting the behavior data into the machine learning model and acquiring the classification output by the machine learning model. In this case, the machine learning model calculates a feature amount of the entered behavior data, and outputs a classification result based on the feature amount.

When preparing an algorithm for calculating a feature amount separately from the machine learning model, the first classifying unit 102 inputs behavior data into the algorithm for calculating the feature amount, and inputs the feature amount calculated by the algorithm into the machine learning model, thereby classifying the behavior data. In this case, the machine learning model does not execute the processing of calculating the feature amount, and classifies the behavior data based on the entered feature value.

In a case where the machine learning model outputs a classification score, the first classifying unit 102 may perform classification relating to the behavior data based on the score. For example, in a case where the machine learning model outputs a score of each of classifications, the first classifying unit 102 may acquire the classification with the highest score as a classification result, or may acquire all of the classifications with a score equal to or more than a threshold value as a classification result.

### [3-4. Second classifying unit]

The second classifying unit 103 is implemented mainly by the control unit 11. The second classifying unit 103 performs classification relating to the behavior data based on a predetermined rule. In this embodiment, a plurality of rules are defined, and thus, the second classifying unit 103 performs classification relating to the behavior data based on each of the rules. For example, the second classifying unit 103 determines, for each rule stored in the rule list L, whether the behavior data satisfies the rule, and performs classification relating to the behavior data.

For example, if a numerical range of a predetermined item included in the behavior data is defined as a rule, the second classifying unit 103 refers to the numerical value of the predetermined item of the behavior data, and determines whether the numerical value is in the range indicated by the rule. Further, for example, if a range of numerical values calculated based on a predetermined item included in the behavior data is defined as a rule, the second classifying unit 103 determines whether a numerical value calculated based on the numerical value of the predetermined item of the behavior data is in the range indicated by the rule.

For example, in a case of a rule having the rule ID "r00001", the second classifying unit 103 calculates a distance from the center of use based on the access location of the behavior data. The second classifying unit 103 determines whether the distance is equal to or more than a threshold value (e.g., 100 km). If the distance is equal to or more than the threshold value, the second classifying unit 103 classifies the user indicated by the behavior data as an unauthorized user. If the distance is less than the threshold value, the second classifying unit 103 may classify the user as a normal user or a user who is neither a normal user nor an unauthorized user.

For example, if the rule ID is "r00002", the second classifying unit 103 determines whether an IP address is a Japanese IP address based on the IP address of the behavior data. The Japanese IP address is designated by the administrator in advance, for example, and may be stored in the data storage unit 100. The second classifying unit 103 determines whether the IP address of the behavior data is included in a predesignated range. If the IP address is not a Japanese IP address, the second classifying unit 103 classifies the user indicated by the behavior data as an unauthorized user. If the IP address is a Japanese IP address, the second classifying unit 103 may classify the user as a normal user or a user who is neither a normal user nor an unauthorized user.

In a case where the rule is a condition regarding a numerical value, a numerical value other than the distance and the IP address may be defined as the rule. For example, if the machine learning model has not learned the user's access time zone and access frequency, these numerical values may be defined as rules. In this case, the second classifying unit 103 may determine whether the access time zone or the access frequency indicated by the behavior data is within a predetermined numerical range, thereby performing classification based on the rule. As another example, a rule regarding a user's telephone number may be defined. In this case, the second classifying unit 103 may determine whether the user's telephone number indicated by the behavior data is a predetermined number, thereby performing classification based on the rule.

Further, for example, if a character of a predetermined item included in the behavior data is defined as a rule, the second classifying unit 103 refers to a character of the predetermined item of the behavior data and determines whether the character is indicated in the rule. The second classifying unit 103 may determine complete match or partial match of characters.

For example, if the rule ID is "r00003", the second classifying unit 103 determines whether a user name is included in the white list based on the user name of the behavior data. If the user name is included in the white list, the second classifying unit 103 classifies the user indicated by the behavior data as a normal user. If the user name is not included in the white list, the second classifying unit 103 may classify the user as an unauthorized user or a user who is neither a normal user nor an unauthorized user.

A rule relating to the black list may be defined instead of the white list. For example, a rule such as "if a user name is in the black list, the user is an unauthorized user" may be defined. In this case, the second classifying unit 103 determines whether the user name is included in the black list based on the user name of the behavior data. If the user name is included in the black list, the second classifying unit 103 classifies the user indicated by the behavior data as an unauthorized user. If the user name is not included in the black list, the second classifying unit 103 may classify the user as a normal user or a user who is neither a normal user nor an unauthorized user.

If a condition relating to characters is a rule, characters other than the user name may be defined as the rule. For example, a character indicating a user ID, an e-mail address, or an address may be defined as a rule. In this case, the second classifying unit 103 may determine whether the user ID, mail address, or address of the user indicated by the behavior data is a predetermined character, thereby performing classification based on the rule.

### [3-5. Determining unit]

The determining unit 104 is implemented mainly by the control unit 11. The determining unit 104 determines whether a rule is to be learned based on statistical information regarding behavior data that satisfies the rule.

The statistic information is information related to statistics of behavior data that satisfies the rule, such as, the number of behavior data that satisfies the rule and the distribution of behavior data that satisfies the rule. The distribution is a distribution of values indicated by the behavior data, such as kurtosis, skewness, moment, density, average value, or standard deviation. The statistical information may be statistical information other than the number and distribution. For example, an evaluation value obtained by substituting the number and the distribution into a predetermined calculation formula may be used, or a shape of a histogram of the behavior data may be used.

"A rule is to be learned" means generating teacher data based on the classification result of the behavior data, and training the machine learning model using the teacher data. For example, teacher data may be generated based on behavior data that satisfies the rule. In contrast, teacher data may be generated based on behavior data that does not satisfy the rule. As another example, teacher data may be generated based on behavior data regardless of whether the rule is satisfied. The teacher data may be generated manually or by a computer such as the server 10.

In this embodiment, a case will be described in which the teacher data is input with the behavior data that satisfies the rule, and outputs a classification result (diagnostic result of the rule) when the rule is satisfied is generated. In a case where an algorithm for calculating a feature value is prepared separately from the machine learning model, teacher data that is input with the feature data of the behavior data that satisfies the rule and outputs the classification result (diagnostic result of the rule) of the case where the rule is satisfied is generated.

In this embodiment, there are a plurality of rules, and thus, the determining unit 104 acquires statistical information for each rule based on behavior data that satisfies the rule, and determines whether the rule is to be learned. The determining unit 104 does not determine that the rule is to be learned if the statistical information does not indicate the predetermined statistics, and determines that the rule is to be learned if the statistical information indicates the predetermined statistics.

The predetermined statistics may be any statistics that may be suitable for learning. In this embodiment, as described below, an example will be described in which the number of behavior data satisfying the rule is equal to or more than a threshold value, or the distribution of the behavior data satisfying the rule is a predetermined distribution.

For example, the determining unit 104 determines whether the number of behavior data satisfying the rule is equal to or more than the threshold value based on the statistical information. The determining unit 104 does not determine that the rule is to be learned if the number of behavior data satisfying the rule is less than the threshold value, and determines that the rule is to be learned if the number of behavior data satisfying the rule is equal to or more than the threshold value. The threshold value may be a fixed value or a variable value. If the threshold value is a variable value, the user may specify the threshold value, or may change the threshold value according to the content of the rule or the total number of behavior data.

For example, if the rule ID is "r00001", the determining unit 104 aggregates and obtains, as statistical information, the behavior data with a distance from the center of use is 100 km or more. If the number of the aggregated behavior data is equal to or more than the threshold value, the determining unit 104 determines that the rule is to be learned. For example, if the rule ID is "r00002", the determining unit 104 aggregates and obtains, as statistical information, the behavior data with an IP address other than a Japanese IP address. If the number of the aggregated behavior data is equal to or more than the threshold value, the determining unit 104 determines that the rule is to be learned. In this embodiment, for the rule having the rule ID "r00003", the learning target flag is off, and thus the determining unit 104 does not acquire statistical information of the rule 3.

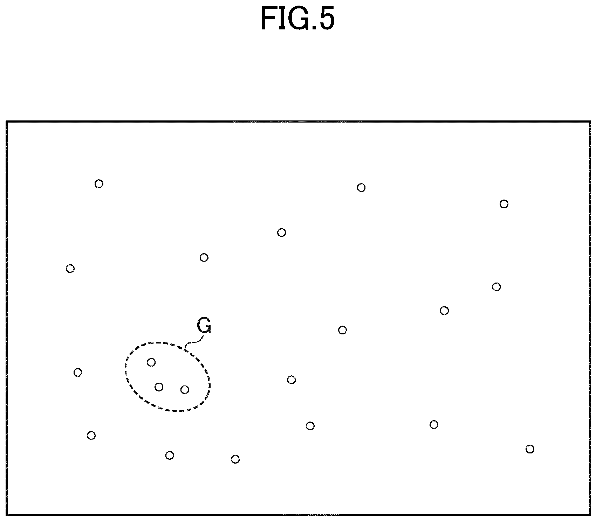

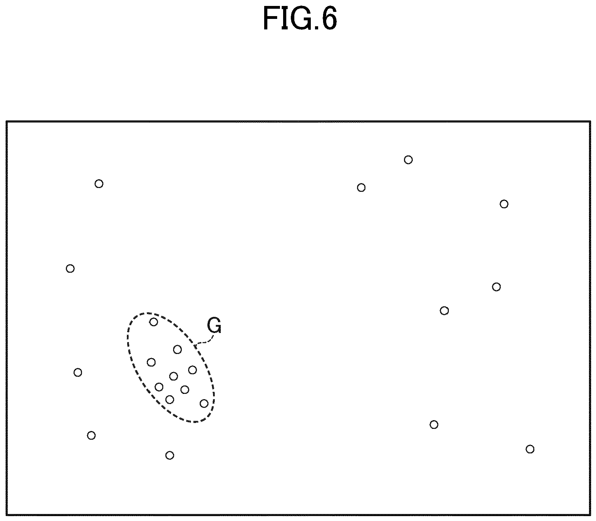

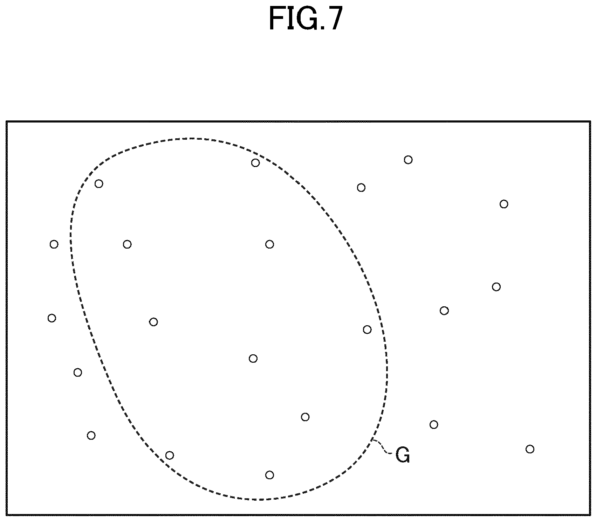

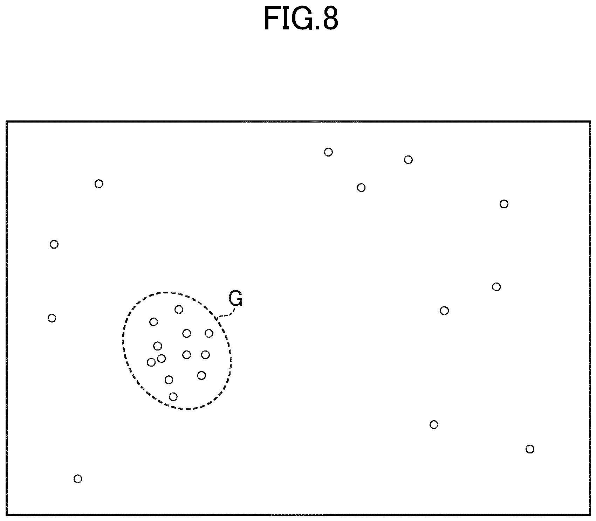

FIG. 5 is a diagram illustrating an example when the number of behavior data satisfying the rule is small, and FIG. 6 is a diagram illustrating an example when the number of behavior data satisfying the rule is large. In FIGs. 5 and 6, the behavior data is indicated as an n-dimensional vector, and the behavior data is plotted in n-dimensional space. As such, the small circles in FIGs. 5 and 6 indicate the behavior data. In FIGs. 5 and 6, a set of items of behavior data satisfying the rule is indicated by a symbol "G." These points also apply to FIGs. 7 and 8 described later.

For example, as shown in FIG. 5, if the amount of behavior data that satisfies the rule is relatively small, the amount of teacher data is also small. As such, features of the behavior data are difficult to learn. For this reason, the determining unit 104 determines that the behavior data that satisfies the rule is not to be learned. In contrast, as shown in FIG. 6, if the amount of behavior data that satisfies the rule is relatively large, there is a sufficient amount of teacher data. As such, features of the behavior data can be learned. For this reason, the determining unit 104 determines that the behavior data that satisfies the rule is to be learned.

For example, the determining unit 104 may determine whether the distribution of behavior data satisfying the rule is a predetermined distribution based on the statistical information. The determining unit 104 does not determine that the rule is to be learned if the distribution of behavior data that satisfies the rule is not the predetermined distribution, and determines that the rule is to be learned if the distribution of behavior data that satisfies the rule is the predetermined distribution.

The predetermined distribution is a condition for learning the rule. If the features of behavior data satisfying the rules are biased, there is a possibility that the behavior data has common features and is suitable for learning. For this reason, in this embodiment, the predetermined distribution corresponds to the case in which the degree of bias of the behavior data is equal to or more than a predetermined bias. The bias is also referred to as a bias.

The bias of the distribution may be expressed using any index, and is represented by, for example, kurtosis, skewness, variance, frequency, or moment. The determining unit 104 determines that the distribution is not the predetermined distribution if these indexes indicating the bias of the distribution are not within the predetermined range, and determines that the distribution is the predetermined distribution if these indexes are within the predetermined range. In this embodiment, a case will be described in which kurtosis is used.

FIG. 7 is a diagram illustrating an example when the behavior data satisfying the rule is not biased, and FIG. 8 is a diagram illustrating an example when the behavior data satisfying the rule is biased. As shown in FIG. 7, if the behavior data satisfying the rule is not biased but distributed, there is a possibility that a common feature does not exist, and thus, the determining unit 104 determines that the behavior data satisfying the rule is not to be learned. In contrast, as shown in FIG. 8, if the behavior data satisfying the rule is biased, there is a possibility that a common feature may exist, and thus, the determining unit 104 determines that the behavior data satisfying the rule is to be learned.

All the rules stored in the rule list L may be learned, although in this embodiment, a rule to be learned is specified and a learning target flag is stored in the rule list L. As such, the determining unit 104 determines whether the rule specified as the learning target based on statistical information regarding the behavior data satisfying the rule specified as the learning target among the plurality of rules is to be learned. The determining unit 104 determines that a rule that has not been specified as a learning target is not to be learned.

### [3-6. First evaluating unit]

The first evaluating unit 105 is implemented mainly by the control unit 11. The first evaluating unit 105 evaluates uncertainty of a rule in the machine learning model. The machine learning model here is a machine learning model used by the first classifying unit 102, and is an existing machine learning model before the rule is learned.

The uncertainty is an index indicating a degree how the classification result by the machine learning model and the classification result by the rule do not match. In other words, the uncertainty indicates the low probability that the machine learning model can output the same classification result as the rule. The greater degree of uncertainty indicates the greater degree of mismatch between the classification result by the machine learning model and the classification result by the rule, and the greater degree of certainty indicates the greater degree of match between the classification result by the machine learning model and the classification result by the rule. The uncertainty may also be referred to as the certainty of prediction by the machine learning model.

The method of evaluating the uncertainty may use a method corresponding to the machine learning model. For example, the first evaluating unit 105 may cause each of the machine learning model and the rule to classify a certain number of behavior data, and perform evaluation based on the degree of match thereof. The degree of match may be the number of behavior data matched with the classification results, or may be a ratio or a probability. The target behavior data may be all the behavior data stored in the behavior database or a part of the behavior data. If the target is a part of the behavior data, only the behavior data that satisfies the rule or the behavior data selected at random may be the target.

The first evaluating unit 105 evaluates that the rule in the machine learning model is certain if the degree of match is equal to or more than the threshold value, and evaluates that the rule in the machine learning model is uncertain if the degree of match is less than the threshold value. The first evaluating unit 105 may evaluate the uncertainty for all of the rules stored in the rule list L, or may evaluate the uncertainty only for some of the rules. When evaluating only some of the rules, the first evaluating unit 105 may evaluate only the rules determined to be learned by the determining unit 104, or only the rules for which the learning target flag is on.

### [3-7. Training unit]

The training unit 106 is implemented mainly by the control unit 11. The training unit 106 performs training processing of a rule that is determined to be learned by the determining unit 104.

The training processing is a processing for training the machine learning model and means, for example, at least one of generating teacher data and adjusting a parameter of the machine learning model based on the teacher data. For example, the training unit 106 generates teacher data based on the classification result of the behavior data according to the rule determined to be learned by the determining unit 104.

For example, the teacher data may be input with the behavior data and output the classification result by the rule, or input with a feature amount of the behavior data and output the classification result by the rule. The training unit 106 performs the training processing based on the generated teacher data. Various methods used in supervised machine learning can be applied to the training method using the teacher data. The training unit 106 adjusts the parameters of the machine learning model so that the result indicated by the teacher data is obtained.

For example, the training unit 106 trains the machine learning model being used by the first classifying unit 102 to additionally learn rules. The machine learning model being used by the first classifying unit 102 is a machine learning model that has been trained based on other teacher data, and is an existing machine learning model stored in the data storage unit 100. The training unit 106 additionally trains the existing machine learning model stored in the data storage unit 100 based on the teacher data generated based on the rule that is determined to be learned by the determining unit 104.

For example, the training unit 106 may train a new machine learning model to learn the rules. The new machine learning model is a machine learning model that is not used by the first classifying unit 102, for example, a model in which a parameter is not adjusted based on the teacher data. The training unit 106 trains the new machine learning model based on the teacher data used when the machine learning model used by the first classifying unit 102 is trained and the teacher data generated based on the rule determined to be learned by the determining unit 104.

In this embodiment, the training unit 106 performs the training processing based on the evaluation result of the first evaluating unit 105. For example, the training unit 106 determines whether to perform the training processing based on the evaluation result of the first evaluating unit 105. The training unit 106 does not perform the training processing if the first evaluating unit 105 does not obtain an evaluation that a rule is uncertain (i.e., if an evaluation that a rule is certain is obtained), and performs the training processing if the first evaluating unit 105 obtains an evaluation that the rule is uncertain. That is, a rule that is not evaluated as being uncertain by the first evaluating unit 105 may have content that can be determined by the machine learning model, and thus, the training unit 106 does not perform the training processing for the rule so as to prevent overlearning.

For example, the training unit 106 may determine a learning coefficient in the training processing based on the evaluation result of the first evaluating unit 105. The training unit 106 lowers a learning coefficient in a case where an evaluation that a rule is uncertain is not obtained from the first evaluating unit 105 than a case where an evaluation that a rule is uncertain is obtained from the first evaluating unit 105. That is, a rule that is not evaluated as being uncertain by the first evaluating unit 105 may have content that can be determined by the machine learning model, and thus, the training unit 106 reduce the influence of the rule on the training in order to prevent overlearning compared to a case where a rule is evaluated as being uncertain by the first evaluating unit 105.

### [3-8. Excluding unit]

The excluding unit 107 is implemented mainly by the control unit 11. The excluding unit 107 excludes a rule that is evaluated as not being uncertain by the first evaluating unit 105 so that the rule is not used. The rule that is evaluated as not being uncertain by the first evaluating unit 105 may have content that can be determined by the machine learning model. As such, the excluding unit 107 excludes the rule so that the rule is not to be determined with the behavior data.

Excluding the rule means not to be referred to by the second classifying unit 103 and not to be compared with the behavior data. In this embodiment, a case will be described in which a rule is excluded by removing the rule from the rule list L. If an excluding flag indicating whether to exclude a rule is prepared, the rule may be excluded without removing the rule from the list.

The excluding unit 107 may exclude a rule that is learned by the training processing so as not to be used. The rule learned by the training processing may have content that can be determined by the machine learning model, and thus the excluding unit 107 excludes the rule so that the rule is not to be determined with the behavior data. However, in this embodiment, the excluding unit 107 determines whether to actually remove the learned rule based on an evaluation of the second evaluating unit 108 described later. For example, if a rule is not evaluated by the second evaluating unit 108 as being uncertain, the excluding unit 107 does not exclude the rule for which the training processing has been executed, and if a rule is evaluated by the second evaluating unit 108 as being uncertain, the excluding unit 107 excludes the rule for which the training processing has been executed.

### [3-9. Second evaluating unit]

The second evaluating unit 108 is implemented mainly by the control unit 11. The second evaluating unit 108 evaluates uncertainty of a rule that is learned by the training processing in the machine learning model. The evaluation method of uncertainty may adopt a method corresponding to the machine learning model, and may be the same method as the first evaluating unit 105 or a method different from the first evaluating unit 105.

In this embodiment, a case will be described in which the evaluation method of the first evaluating unit 105 is the same as the evaluation method of the second evaluating unit 108. For this reason, the second evaluating unit 108 may cause each of the machine learning model, in which a rule is learned by the training processing, and the rule to classify a certain number of behavior data, and evaluate the rule based on the degree of match. The first evaluating unit 105 evaluates that the rule in the machine learning model is certain if the degree of match is equal to or more than the threshold value, and evaluates that the rule in the machine learning model is uncertain if the degree of match is less than the threshold value.

### [3-10. Switching unit]

The switching unit 109 is implemented mainly by the control unit 11. The switching unit 109 switches to a machine learning model, in which the rule is learned by the training processing, based on the evaluation result of the second evaluating unit 108. For example, if a rule is evaluated by the second evaluating unit 108 as being uncertain, the switching unit 109 does not switch the machine learning model but operates the existing machine learning model, and if a rule is not evaluated by the second evaluating unit 108 as being uncertain, the switching unit 109 switches the machine learning model. When switching the machine learning model, the switching unit 109 deletes the old machine learning model from the data storage unit 100 and replaces it with the machine learning model learned by the learning unit 106.

### [4. Processing executed in this embodiment]

Next, the processing executed in the learning system S will be described. Here, a classification processing for classifying a user as a normal user or an unauthorized user and a training processing for training a machine learning model to learn rules will be described.

### [4-1. Classification processing]

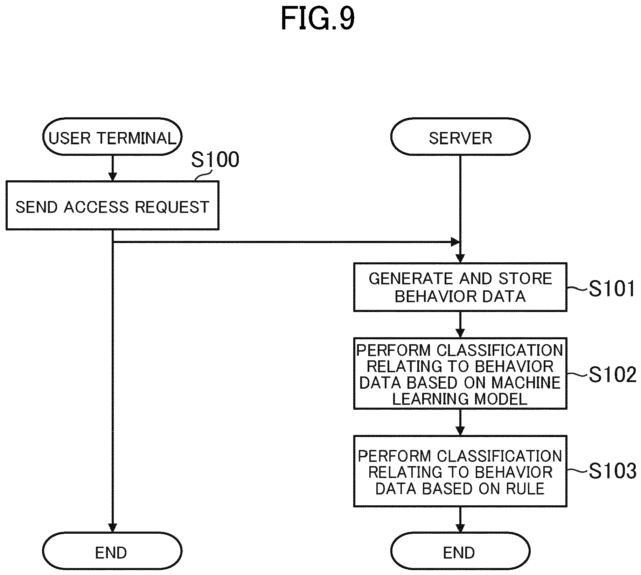

FIG. 9 is a flowchart showing an example of the classification processing. The classification processing shown in FIG. 9 is executed by the control units 11 and 21 operating according to programs stored in the storage units 12 and 22, respectively. The processing described below is an example of the processing executed by the functional block shown in FIG. 2. Assume that, when the classification processing is executed, a user has registered for use and has logged into the server 10.

As shown in FIG. 9, in the user terminal 20, when the user designates a URL of the server 10, the control unit 21 sends an access request to the server 10 (S100). Assume that the access request in S100 includes the URL specified by the user, the user ID, the user name, and the IP address of the user terminal 20.

When the server 10 receives the access request, the control unit 11 generates behavior data and stores the data in the behavior database DB (S101). In S101, the control unit 11 generates a new record in the behavior database DB, and stores the user ID, the user name, the IP address, and the URL included in the access request in the new record. The control unit 11 stores a location estimated from the IP address as the access location, and stores the current date and time acquired using the real-time clock and GPS information, for example, as the access date and time.

The control unit 11 performs classification relating to the behavior data generated in S100 based on the machine learning model (S102). In S102, the control unit 11 enters the behavior data into the machine learning model. The machine learning model calculates a feature amount of the entered behavior data, and classifies the user into a normal user or an unauthorized user based on the feature amount. The control unit 11 acquires the classification result output from the machine learning model, and stores the acquired classification result in the behavior database DB.

The control unit 11 performs classification relating to the behavior data generated in S103 based on the rules indicated by the rule list L (S103). In S103, the control unit 11 determines, for each rule indicated by the rule list L, whether the behavior data satisfies the rule. If it is determined that the rule is satisfied, the control unit 11 stores the diagnostic result associated with the rule in the behavior database DB. Nothing in particular may be stored for the rules that are not satisfied by the behavior data. If the user is classified as an unauthorized user in the processing of S102 or S103, a notification such as an email may be sent to the administrator to ask for the administrator's decision, or a request for additional authentication may be sent to the user.

### [4-2. Training processing]

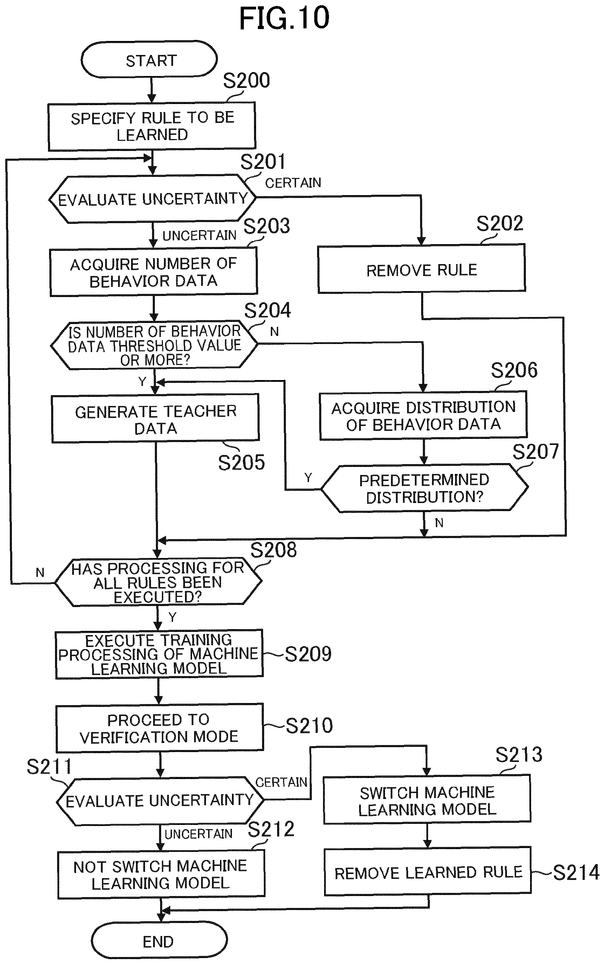

FIG. 10 is a flowchart showing an example of the training processing. The training processing shown in FIG. 10 is executed when the control unit 11 operates in accordance with the program stored in the storage unit 12. The processing described below is an example of the processing executed by the functional block shown in FIG. 2. Assume that, when the training processing is executed, the rules generated by the administrator are stored in the rule database. The training processing may be executed at any timing. For example, the training processing may be executed when the administrator performs a predetermined operation, or when a predetermined date and time arrives.

As shown in FIG. 10, the control unit 11 specifies a rule to be learned based on the rule database (S200). In S200, the control unit 11 refers to the learning target flags of all the rules stored in the rule database, and identifies a rule for which the learning target flag is turned on. The processing of S201 to S208 described below is executed for each rule to be learned.

The control unit 11 evaluates uncertainty of a rule to be learned in the existing machine learning model based on the behavior database DB (S201). In S201, the control unit 11 evaluates the uncertainty based on a degree of match between the diagnostic result of the machine model stored in the behavior database DB and the diagnostic result of the rule to be learned. Here, if the degree of match is equal to or more than a threshold value, an evaluation that the rule is certain is obtained, and if the degree of match is less than the threshold value, an evaluation that the rule is uncertain is obtained.

If it is evaluated that the rule to be learned is certain (S201; certain), the rule may have content that can be determined by an existing machine learning model. As such, the control unit 11 removes the rule to be learned from the rule list L (S202), and proceeds to the processing of S208. This rule is not learned by the machine learning model.

On the other hand, if it is evaluated that the rule to be learned is uncertain (S201; uncertain), the control unit 11 acquires the number of behavior data that satisfy the rule to be learned based on the behavior database DB (S203) . In S203, the control unit 11 refers to the rule diagnostic result of the behavior database DB, and counts the behavior data in which the classification result of the rules to be learned is stored. At S203, the control unit 11 may determine whether the behavior data stored in the behavior database DB satisfies the rule to be learned (executes the same processing as S103), and count the behavior data that satisfy the rule.

The control unit 11 determines whether the number of behavior data satisfying the rule to be learned is equal to or more than a threshold value (S204). If it is determined that the number of behavior data satisfying the rule to be learned is equal to or more than the threshold value (S204Y), the control unit 11 generates teacher data based on the behavior data satisfying the rule (S205). In S205, the control unit 11 generates the teacher data that is input with the behavior data satisfying the rule or the feature amount of such behavior data and outputs the classification result based on the rule.

On the other hand, if it is not determined that the number of behavior data satisfying the rule to be learned is equal to or more than the threshold value (S204;N), the control unit 11 acquires the distribution of the behavior data satisfying the rule to be learned based on the behavior database DB (S206). In S206, the control unit 11 calculates the kurtosis of the behavior data that satisfies the rule to be learned. As described above, any index other than kurtosis can be used. For example, skewness or moment may be used.

The control unit 11 determines whether the distribution of behavior data satisfying the rule to be learned is a predetermined distribution (S207). In S207, the control unit 11 determines whether the kurtosis calculated in S206 is equal to or more than a threshold value. If the kurtosis is equal to or more than the threshold value, the control unit 11 determines that the distribution is biased and thus is the predetermined distribution, and if the kurtosis is less than the threshold value, the distribution is not biased and is thus not the predetermined distribution.

If it is determined that the distribution of behavior data satisfying the rule to be learned is the predetermined distribution (S207;Y), the processing proceeds to S205 and teacher data is generated. On the other hand, if it is not determined that the distribution of behavior data satisfying the rule to be learned is the predetermined distribution (S207; N), the control unit 11 determines whether the processing has been executed for all the rules to be learned (S208) .

If it is not determined that the processing has been executed for all the rules to be learned (S208;N), the processing returns to S201, and the processing for the rules that have not been determined yet is executed. On the other hand, if it is determined that the processing has been executed for all the rules to be learned (S208;Y), the control unit 11 executes the training processing of the machine learning model based on the teacher data generated in S205 (S209), and proceeds to a verification mode (S210).

The verification mode is a mode in which the existing machine learning model and the machine learning model, for which the training processing is executed in S209, coexist. In this case, in the classification processing in S102, both of these machine learning models may perform classification, or one of the machine learning models may be selected with a predetermined probability. The verification mode is continued for a certain period of time. Subsequent processing is executed after the certain period of time.

The control unit 11 determines whether the machine learning model being verified is uncertain (S211). The processing of S211 is the same as that of S202, but differs from S202 in that the diagnostic result of the machine learning model trained in S209 is referred to instead of the diagnostic result of the existing machine learning model.

If it is determined that the machine learning model being verified is uncertain (S211; uncertain), the control unit 11 does not switch the machine learning model (S212) and ends this processing. In this case, the rule that should have been trained by the training processing has not been successfully learned by the machine learning model, and thus the machine learning model being verified is not applied and returns to the existing machine learning model. In this case, the rule is maintained without being removed.

On the other hand, if it is determined that the machine learning model being verified is certain (S211; certain), the control unit 11 switches the machine learning model (S213) and removes the learned rule from the rule list L (S214). Subsequently, the verification mode terminates, and the processing of S102 of the classification processing is executed based on the machine learning model switched in S213.

According to the learning system S of the present embodiment, it is determined whether a rule is to be learned based on statistical information regarding data satisfying the rule, and training processing for the rule determined to be learned is executed. As a result, it is possible to learn rules suitable for learning that are narrowed down in a statistical point of view, thereby improving the accuracy of the machine learning model and reducing the number of rules. For example, when the number of rules increases, a large amount of processing for comparing behavior data with rules need to be executed. This increases the processing load on the server 10 and requires more time to determine the classification result. In this regard, by reducing the number of rules, it is possible to reduce the processing for comparing behavior data with rules, reduce the processing load on the server 10, and improve the processing speed. Furthermore, the memory capacity of the server 10 can be reduced by reducing the rules.

If the number of data satisfying the rule is less than the threshold value, the rule is not determined to be learned, and if the number of data satisfying the rule is equal to or more than the threshold value, the rule is determined to be learned. This can prevent the training processing from being executed even though there is not a sufficient amount of data for learning. Accordingly, it is possible to prevent the accuracy of the machine learning model from being decreased.

Further, if the distribution of data satisfying a rule is not a predetermined distribution, the rule is not determined to be learned, and if the distribution of data satisfying a rule is the predetermined distribution, the rule is determined to be learned. This can prevent the training processing from being executed even though the distribution is not suitable for learning. Accordingly, it is possible to prevent the accuracy of the machine learning model from being decreased.

The uncertainty of a rule in the machine learning model is evaluated to execute the training processing, and thus, it is possible to prevent rules having content that can be sufficiently determined by the machine learning model from being learned. This can prevent the machine learning model from overlearning. For example, a rule that has been evaluated as being not uncertain is not learned, but a rule that has been evaluated as uncertain is learned. In this manner, the machine learning model can be trained to learn a rule that cannot be determined by the machine learning model, and the accuracy of the machine learning model can be effectively increased.

The rule that has been evaluated as being not uncertain may be determined by the machine learning model, and thus, such a rule is excluded so as not to be used in classification, thereby effectively reducing the number of rules. As a result, the number of rules to be compared with the data can be reduced, which can effectively reduce the processing load on the server 10 and effectively improve the processing speed.

The rule learned by the training processing may be able to be determined by the machine learning model. As such, by excluding such a rule so as not to be used, the number of rules can be effectively reduced. As a result, the number of rules to be compared with the data can be reduced, which can effectively reduce the processing load on the server 10 and effectively improve the processing speed.

The machine learning model is switched to a machine learning model in which the rule is learned based on the evaluation result of the uncertainty of the rule in the machine learning model in which the rule is learned, instead of switching the machine learning model immediately after learning the rule. This serves to prevent a decrease in the accuracy of the machine learning model.

The machine learning model is not trained to learn all of the rules but the rules specified as learning targets, and thus, it is possible to prevent unnecessary rules from being learned and the accuracy of the machine learning model from being decreased.

The behavior data relating to user's behavior is classified, and the accuracy of classifying the user's behavior can be thereby improved.

### [5. Variations]

The present invention is not to be limited to the above described embodiment. The present invention can be changed as appropriate without departing from the spirit of the invention.

For example, in the embodiment, the case has been described in which whether to learn a rule is determined based on both the number of behavior data satisfying the rule and the distribution of the behavior data satisfying the rule, although whether to learn the rule may be determined based on only one of them. Further, for example, whether to learn a rule may be determined based on statistical information other than the number and the distribution. For example, the processing of evaluating the uncertainty of the rule may be omitted. For example, the case has been described in which the rule learned by the training processing is excluded, although such a rule may not be necessarily excluded but the frequency of referring to the rule may be reduced. For example, the case has been described in which the verification mode is provided for a certain period of time, although the verification mode may not be particularly provided. For example, the case has been described in which a rule to be learned is specified, although the rule may not be particularly specified but all the rules may be learned.

For example, in the embodiment, the case has been described in which fraud of a user who accesses a website is detected, although the learning system S can be applied to a case where classification relating to data is performed and can be applied to other cases. For example, the learning system S can be applied to a case other than the case for detecting the user fraud, and whether to learn a rule may be determined in a case where the machine learning models such as natural language processing, machine translation, sentence conversion, and chatbots are used.

For example, the learning system S may be applied to a case where an illegal act when a user purchases a product on the Internet is detected. In this case, the server 10 provides the user with a website of an online shopping mall. Assume that the user has registered for use and previously registered payment information, such as a card number, in the server 10. The payment information may include information such as a shop ID of a shop where the product is purchased, a shop name, a product ID of the product, the product name, quantity, payment amount, and a card number. For example, when the user purchases the product, the server 10 generates behavior data including the payment information of the user. The administrator can specify conditions relating to the payment amount and the delivery address as rules. The learning system S determines whether the rule is satisfied based on the behavior data including the payment information of the user. The learning system S may determine whether the rule is to be learned based on statistical information regarding the behavior data that satisfies the rule. The details of the determination processing and the training processing are as described in the embodiment.

For example, the case has been described in which the classification relating to the behavior data is performed, although the classification relating to data other than behavior data of a user may be performed. For example, the learning system S may be used for a case where subjects captured in image data are classified using a machine learning model and rules. Further, for example, the learning system S may be used in a case where weather is classified using a machine learning model and rules based on temperature and humidity indicated by weather data. Further, for example, the learning system S may be used for a screen for generating a summary of sentence data using a machine learning model and rules. In addition, the learning system S may be applied to a case where data having any content is classified.

For example, the case has been described in which the functions are implemented in the server 10, although the functions may be shared among a plurality of computers. For example, the functions may be shared among the server 10, the user terminal 20, and the administrator terminal 30. For example, processing such as classification may not be executed by the server 10, but may be executed by the user terminal 20 or the administrator terminal 30. For example, if the learning system S includes a plurality of server computers, the functions may be shared by the plurality of server computers. Further, for example, the data described as being stored in the data storage unit 100 may be stored by a computer other than the server 10.

## Claims

1. A learning system comprising:
first classifying means for performing classification relating to data based on a machine learning model;
second classifying means for performing classification relating to the data based on a predetermined rule;
determining means for determining whether the rule is to be learned based on statistical information relating to data satisfying the rule; and
training means for executing training processing of the rule that is determined to be learned by the determining means.

2. The learning system according to claim 1, wherein
the statistical information indicates a number of data satisfying the rule,
if the number of data satisfying the rule is less than a threshold value, the determining means does not determine that the rule is to be learned, and
if the number of data satisfying the rule is equal to or more than the threshold value, the determining means determines that the rule is to be learned.

3. The learning system according to claim 1 or 2, wherein the statistical information indicates a distribution of data satisfying the rule,
if the distribution of the data satisfying the rule is not a predetermined distribution, the determining means does not determine that the rule is to be learned, and
if the distribution of the data satisfying the rule is the predetermined distribution, the determining means determines that the rule is to be learned.

4. The learning system according to any one of claims 1 to 3, further comprising evaluating means for evaluating an uncertainty of the rule in the machine learning model, wherein
the training means executes the training processing based on an evaluation result of the evaluating means.

5. The learning system according to claim 4, further comprising excluding means for excluding a rule evaluated by the evaluating means as not being uncertain so that the rule is not used.

6. The learning system according to any one of claims 1 to 5, further comprising excluding means for excluding a rule learned by the training processing so that the rule is not used.

7. The learning system according to any one of claims 1 to 6, further comprising:
evaluating means for evaluating an uncertainty of a rule in a machine learning model in which the rule has been learned by the training processing; and
switching means for switching to a machine learning model in which a rule has been learned by the training processing based on the evaluation result of the evaluating means.

8. The learning system according to any one of claims 1 to 7, wherein
the second classifying means performs classification relating to the data based on each of a plurality of rules,
the learning system further includes receiving means for receiving a designation of a rule to be learned among the plurality of rules, and
the determining means determines whether the rule, which is designated as a rule to be learned among the plurality of rules, is to be learned based on statistical information relating to data satisfying the rule designated as a rule to be learned.

9. The learning system according to any one of claims 1 to 8, wherein
the data is behavior data relating to behavior of a user,
the machine learning model is a machine learning model for classifying whether the user is an unauthorized user, and
the rule is a rule for classifying whether the user is an unauthorized user.

10. A learning method comprising:
a first classifying step of performing classification relating to data based on a machine learning model;
a second classifying step of performing classification relating to the data based on a predetermined rule;
a determining step of determining whether the rule is to be learned based on statistical information relating to data satisfying the rule; and
a training step of executing training processing of the rule that is determined to be learned in the determining step.

11. A program for causing a computer to function as:
first classifying means for performing classification relating to data based on a machine learning model;
second classifying means for performing classification relating to the data based on a predetermined rule;
determining means for determining whether the rule is to be learned based on statistical information relating to data satisfying the rule; and
training means for executing training processing of the rule that is determined to be learned by the determining means.
